# EUROPÄISCHE PATENTSCHRIFT

(11) **EP 1 964 641 B1**
(45) Veröffentlichungstag und Bekanntmachung des Hinweises auf die Patenterteilung: **01.07.2015**
(21) Anmeldenummer: 08101883.0
(22) Anmeldetag: 22.02.2008
(51) Int. Cl.: B23K 33/00, H02K 1/26, F01D 5/06

(54) **Verfahren zur Herstellung eines Rotors für einen Generator, insbesondere eines Turbogenerators**
Method for manufacturing a rotor for a generator, especially a turbogenerator
Procédé de fabrication d'un rotor pour un générateur, partculièrement un turboalternateur

(30) Priorität: 02.03.2007 CH 3502007
(43) Veröffentlichungstag der Anmeldung: 03.09.2008
(73) Patentinhaber: ALSTOM Technology Ltd, 5400 Baden (CH)
(72) Erfinder: Rotzinger, Ralf, 79730, Murg-Niderhof (DE); Vogt, Markus, 5420, Ehrendigen (CH); Joho, Reinhard, 5022, Rombach (CH)
(74) Vertreter: Alstom Technology Ltd

(56) Entgegenhaltungen:
- EP-A- 1 109 017
- EP-A- 1 712 324
- CH-A5- 563 833
- DE-B- 1 017 263
- DE-B- 1 257 793
- US-A- 3 780 428

## Beschreibung

### TECHNISCHES GEBIET

Die vorliegende Erfindung bezieht sich auf das Gebiet der Technik von Generatoren zur Erzeugung elektrischer Energie. Sie betrifft einen Rotor gemäss dem Oberbegriff des Anspruchs 1.

### STAND DER TECHNIK

Es ist seit langem bekannt, Rotoren grosser Turbomaschinen wie Dampf- oder Gasturbinen aus einzelnen, zu einer Einheit zusammengeschweissten Rotorelementen herzustellen (siehe z.B. die EP-A1-0 604 754). Hierdurch ist es unter anderem möglich, die thermisch unterschiedlich beanspruchten Abschnitte des Rotors aus unterschiedlichen Materialien herzustellen und im Hinblick auf die Kosten und die Standfestigkeit zu optimieren. Auch ist es beim Materialeinkauf einfacher, vergleichsweise kleine scheibenförmige Elemente zu besorgen, als einen speziell gefertigten und ausgebildeten Monoblock.

Bei den Rotoren von elektrischen Generatoren, insbesondere Turbogeneratoren, hat sich die Herstellung des Rotors durch Zusammenschweissen aus einzelnen scheibenförmigen Elementen bisher nicht durchgesetzt. Bei Rotoren von Turbogeneratoren ist neben den mechanischen und thermischen Eigenschaften auch auf die magnetischen und elektrischen Eigenschaften zu achten, weil die Rotoren Teil eines magnetischen Kreises sind und üblicherweise eine Wicklung tragen. Für die Aufnahme der Wicklung sind im Ballen des Rotors in axialer Richtung verlaufende Nuten vorgesehen, die mit einer gewissen Nuttiefe radial ins Innere des Rotors eingelassen sind (siehe z.B. die EP-1 361 642).

Aus einzelnen Scheiben zusammengesetzte Rotoren von Turbogeneratoren sind in der Vergangenheit verschiedentlich vorgeschlagen worden: Aus der DE-PS-573 512 ist ein Läufer für Turbogeneratoren bekannt, der aus axial nebeneinander gereihten vollen Scheiben zusammengesetzt ist. Die Endscheiben sind mit den Wellenendstücken in einem Stück hergestellt. Die Scheiben sind an ihren Umfängen miteinander durch Schweissnähte verbunden. Zur Unterstützung der Schweissnähte kann es vorteilhaft sein, die Scheiben zusätzlich durch Bolzen miteinander zu verbinden. Die Scheibenflächen können zur Stabilisierung auch abwechselnd mit Erhöhungen und Vertiefungen versehen werden, die ineinander greifen.

Zur Vergrösserung der Festigkeit können Schweissnähte auch an den in den Läuferumfang eingeschnittenen Wicklungsnuten entlang vorgesehen werden. Nachteilig ist dabei, dass die schmalen, auf den Rand beschränkten Schweissnähte, insbesondere wenn sie noch durch die Wicklungsnuten unterbrochen sind, nur eine begrenzte Festigkeit des geschweissten Rotors ermöglichen. Zusätzliche Schweissnähte in den Nuten erhöhen zwar die Festigkeit in einem gewissen Umfang, sind jedoch nur mit hohem Aufwand zu realisieren.

Aus der US-A-3,780,428 ist weiterhin ein Rotor für einen Turbogenerator bekannt, bei dem ebenfalls der Rotorkörper durch randseitiges Verschweissen einer Anzahl von Scheiben aufgebaut ist. Hier wird den schmalen Schweissnähten eine zusätzliche Festigkeit dadurch gegeben, dass die Endstücke des Rotors durch einen innen liegenden Bolzen verbunden werden, der den Rotor in axialer Richtung unter Druckspannung setzt. Auch diese Massnahmen zur Erhöhung der Festigkeit sind extrem aufwändig und führen zu einem sehr komplexen Aufbau des Rotors.

Rotoren von Turbogeneratoren mit tiefen Schweissnähten sind in der Vergangenheit ebenfalls bereits vorgeschlagen worden (siehe die DE-AS-1 017 263).

Aus der CH-A5-563 833 ist ein Verfahren zum Elektronenstrahlschweissen von Rotoren bekannt, bei dem durch Vorsehen einer Schmelzlippe an der beim Durchschweissen gebildeten Unterraupe eine kerbenfreie Unterraupe erzielt wird.

Weiterhin beschreibt die DE-AS-1 257 793 einen aus zusammengeschweissten Radscheiben bestehenden Turboläufer für Dampf- oder Gasturbinen oder vergleichbare Turbomaschinen, bei dem durch eine speziell geformte Entlastungskerbe am Grund der Schweissnaht eine Übertragung von durch das Schweissen entstehenden Spannungen auf das Läufermaterial begrenzt oder ganz vermieden wird.

Im Lichte eines wiedererwachenden Nukleargeschäfts werden wieder grosse Rotoren (4-polige Turbogeneratoren, Stückgewicht des Generatorrotors bis zu 300 Tonnen) gefordert. Solche grossen Schmiedestücke können weltweit nur von einigen wenigen Lieferanten auf Bestellung gefertigt werden. Es besteht ein Ausschussrisiko, welches möglicherweise erst im späteren Bearbeitungszustand festgestellt werden kann.

Gelegentlich treten mit zunehmender Grösse und zunehmendem Gewicht des Schmiedestückes Inhomogenitäten hinsichtlich physikalischer Eigenschaften und fertigungsbedingter Restspannungen auf. Kleinere Schmiedestücke hingegen können sehr gut durchgeschmiedet werden und man läuft kaum Gefahr, dass sich der Rotor infolge von Asymmetrien in der Werkstoffstruktur während der Endbearbeitung verkrümmt.

### DARSTELLUNG DER ERFINDUNG

Es ist daher Aufgabe der Erfindung, ein Verfahren zur Herstellung eines Rotors für einen Generator, insbesondere einen Turbogenerator anzugeben, der aus miteinander verschweissten, scheibenförmigen Rotorelementen aufgebaut ist und ein möglichst grosses magnetisch wirksames Volumen bei hoher mechanischer Festigkeit aufweist.

Die Aufgabe wird durch die Gesamtheit der Merkmale des Anspruchs 1 gelöst. Wesentlich für die Erfindung ist, dass am äusseren Umfang des Spaltes zwischen den miteinander verschweissten Rotorelementen dieser Spalt in einen sich verbreiternden, an die Schweissnaht angrenzenden Hohlraum übergeht. Hierdurch ist es insbesondere möglich, den Hohlraum geometrisch derart auszubilden, dass einerseits sein Volumen möglichst gering ist und andererseits in seinem Bereich möglichst geringe mechanische Spannungen entstehen.

Eine Ausgestaltung der Erfindung zeichnet sich dadurch aus, dass die Schweissnähte am inneren Rand jeweils eine umlaufende Wurzelnaht aufweisen, dass der Hohlraum auf der radialen Höhe der Wurzelnaht beidseitig einen Hinterstich umfasst, und dass der Hohlraum zwischen Hinterstich und Spalt durch eine Übergangskontur begrenzt wird.

Gemäss einer Weiterbildung dieser Ausgestaltung ist die Übergangskontur linear und mündet unter einem vorgegebenen Winkel in den Spalt ein. Alternativ dazu kann die Übergangskontur kreisbogenförmig mit einem vorgegebenen Radius ausgebildet sein.

Eine weitere Ausgestaltung der Erfindung zeichnet sich dadurch aus, dass die Rotorelemente im wesentlichen zylindrisch ausgebildet sind und dass die Schweissnahttiefe der Schweissnähte über den gesamten Umfang des Rotors konstant ist.

Weiterhin ist es für die Ausbildung des Spaltes von Vorteil, wenn die Anschlussflächen senkrecht zur Rotorachse orientiert und im wesentlichen eben ausgebildet sind.

Eine andere Ausgestaltung ist dadurch gekennzeichnet, dass der Rotor einen Rotorballen mit einem ersten Aussendurchmesser und zwei Wellenenden mit einem zweiten und dritten Aussendurchmesser aufweist, dass der erste Aussendurchmesser grösser als der zweite und dritte Aussendurchmesser ist, und dass Schweissnähte im Bereich des Ballens und im Bereich der Wellenenden vorgesehen sind. Hierdurch können grosse Sprünge im Aussendurchmesser bei den Schmiedestücken für die Wellenenden vermieden werden.

Alternativ dazu ist es denkbar, dass der Rotor einen Rotorballen mit einem ersten Aussendurchmesser und zwei Wellenenden mit einem zweiten und dritten Aussendurchmesser aufweist, dass der erste Aussendurchmesser grösser als der zweite und dritte Aussendurchmesser ist, und dass Schweissnähte nur im Bereich des Rotorballens vorgesehen sind. Hierdurch können die teilweise hohen Anforderungen hinsichtlich Geradheit und Rundlauf der Wellenenden leicht erfüllt werden.

Gemäss einer anderen Ausgestaltung der Erfindung umfasst der Rotor als Rotorelemente neben den zwei Wellenenden mehrere miteinander verschweisste Scheiben, wobei die axialen Längen der Scheiben unterschiedlich sind. Auf diese Weise können mit Vorteil z.B. dünne Scheiben am Ende des Rotorballens vorgesehen werden.

Gemäss einer weiteren bevorzugten Ausgestaltung können die Wellenenden und/oder Scheiben einen oder mehrere zentrale Hohlräume aufweisen, die insbesondere als durchgängige oder Sacklochbohrungen ausgebildet sind. Die Hohlräume können für Materialkontrollen, Zuführung des Erregerstroms, Zu- und Abfuhr von Kühlmedien und dgl. eingesetzt werden. Besonders günstig ist dies wegen der kreuzförmigen Magnetfeldkonfiguration für 4-polige Turbogeneratorrotoren. Die Wellenenden können dabei massiv oder mit Sacklöchern ausgeführt werden, z.B. zur Abdichtung gegen Kühlgas oder um stellenweise hohe mechanische Festigkeiten zu erreichen. Auch ist es denkbar, Scheiben mit mehreren einzelnen Hohlräumen zu verwenden. Das Ausmass des Hohlraums der Scheiben kann unterschiedlich sein, um ggf. das mechanische Verhalten des Rotors zu verbessern. Auch kann die Höhe der Schweissnähte im Bereich des Rotorballens unterschiedlich sein.

Der Spalt zwischen den verschweissten Scheiben sollte eine möglichst geringe Spaltbreite haben. Insbesondere ist die Spaltbreite ungefähr gleich der Schweissnahtbreite der Schweissnaht.

Weiterhin ist es denkbar, dass zur Materialkontrolle und/oder zur Zu- und Abfuhr von Kühlmedien radiale Kanäle von den Hohlräumen zur Aussenkontur des Rotors oder zu im Rotorballen angeordneten Wicklungsnuten führen.

Eine Ausgestaltung des erfindungsgemässen Herstellungsverfahrens ist dadurch gekennzeichnet, dass der Rotor vor dem Überdrehen spannungsarm geglüht wird.

Eine andere Ausgestaltung zeichnet sich dadurch aus, dass Rotorelemente verwendet werden, welche an den zu verschweissenden Seiten zwischen dem Hohlraum und dem anschliessenden Schweissspalt zum Zentrieren und zur Einstellung der Breite des Spaltes umlaufende Bundstege aufweisen, die mit einer abgestuften Randkontur zentrierend ineinandergreifen und beim späteren Verschweissen aufgeschmolzen werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: einen Längsschnitt durch einen Rotor gemäss einem Ausführungsbeispiel der Erfindung, bei dem sich die Schweissnähte ausschliesslich im Rotorballen befinden und von beiden Enden Sacklochbohrungen in den Rotor eingebracht sind;
- Fig. 2: einen Längsschnitt durch einen Rotor gemäss einem anderen Ausführungsbeispiel der Erfindung, bei dem das eine Wellenende massiv ausgeführt ist und durch eine Schweissnaht (S) im Wellenden ohne Durchmessersprung ausgeführt werden kann;
- Fig. 3: einen Längsschnitt durch einen Rotor gemäss einem weiteren Ausführungsbeispiel der Erfindung, bei dem die Wicklungsnuten erkennbar sind, und eine zentrale Sacklochbohrung zur Zufuhr von einem Kühlmedium benutzt wird;
- Fig. 4: in verschiedenen Teilfiguren (4a bis 4d) verschiedene Ausführungsbeispiele für den Rotorballen eines Rotors nach der Erfindung;
- Fig. 5: in verschiedenen Teilfiguren (5a bis 5c) verschiedene Ausführungsbeispiele für die Wellenenden eines Rotors nach der Erfindung;
- Fig. 6: ein Ausführungsbeispiel für die Auslegung einer Schweissverbindung zwischen Scheibe und Wellenende eines Rotors nach der Erfindung;
- Fig. 7: in einer vergrösserten Detailansicht eine mögliche Ausgestaltung des um den Spalt laufenden Hohlraums in der Schweissverbindung mit linearer Übergangskontur;
- Fig. 8: in einer vergrösserten Detailansicht eine andere mögliche Ausgestaltung des um den Spalt laufenden Hohlraums in der Schweissverbindung mit kreisbogenförmiger Übergangskontur und
- Fig. 9: in einer vergrösserten Detailansicht zwei vor dem Schweissen aneinandergrenzende Rotorelemente, die zur Zentrierung und zum Offenhalten des Spaltes jeweils mit einem umlaufenden Bundsteg ausgestattet sind.

### WEGE ZUR AUSFÜHRUNG DER ERFINDUNG

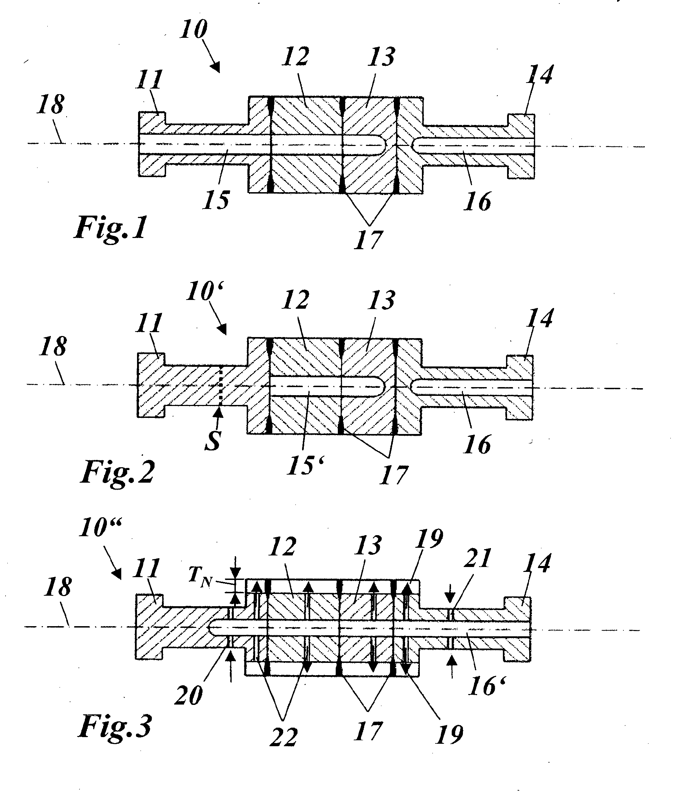

In den Fig. 1 bis 3 sind im Längsschnitt verschiedene Ausführungsbeispiele eines Turbogenerator-Rotors nach der Erfindung wiedergegeben.

Der Rotor 10 der Fig. 1 setzt sich zusammen aus zwei in Richtung der Rotorachse 18 mittig angeordneten Scheiben 12, 13, die miteinander und an den Enden jeweils mit einem Wellenende 11 bzw. 14 verschweisst sind. Die Scheiben 12, 13 und die Wellenenden 11, 14 stellen zusammen die Rotorelemente dar, die im wesentlichen zylindrisch ausgebildet sind. Die Anschlussflächen der Rotorelemente 11,..,14, mit denen die Rotorelemente untereinander verbunden (verschweisst) sind, sind senkrecht zur Rotorachse 18 orientiert und im wesentlichen eben ausgebildet.

Der Rotorballen des Rotors 10 wird gebildet durch die beiden Scheiben 12, 13 und innere Abschnitte der beiden Wellenenden 11, 14. Er zeichnet sich durch einen gegenüber den Wellenenden 11, 14 vergrösserten Aussendurchmesser aus. Im Rotorballen sind die Wicklungsnuten (19 in Fig. 3) untergebracht, welche die Rotorwicklung aufnehmen. Die Unterteilung des Rotors 10 in die Rotorelemente 11,..,14 ist dabei so vorgenommen worden, dass Schweissnähte 17 nur im Bereich des Rotorballens vorhanden sind. Hierdurch werden die teilweise hohen Anforderungen hinsichtlich Geradheit und Rundlauf der Wellenenden 11, 14 leicht erfüllt.

Die axialen Längen der Scheiben 12, 13 sind unterschiedlich lang gewählt; z.B. können dünne Scheiben am Ende des Rotorballens angeordnet werden. Im Rotor 10 können zentrale, axiale Bohrungen 15, 16 vorgesehen werden, die im Beispiel der Fig. 1 als zwei von gegenüberliegenden Seiten unterschiedlich weit in den Rotor 10 hineinreichende Sacklochbohrungen ausgebildet sind. Die linke Bohrung 15 reicht dabei durch das linke Wellenende 11 und die daran anschliessende erste Scheibe 12 hindurch und endet in der zweiten Scheibe 13. Die rechte Bohrung 16 endet im rechten Wellenende 14, so dass zwischen den beiden Bohrungen 15, 16 kein Durchgang besteht. Die beiden Bohrungen dienen insbesondere der Gewichtsoptimierung (Gewichtsreduktion). Der damit einhergehende Verlust an magnetisch wirksamem Volumen ist gering, wenn der Rotor 10 insbesondere 4-polig ausgelegt ist.

Beim Ausführungsbeispiel der Fig. 2 besteht der Rotor 10' ebenfalls aus zwei Wellenenden 11, 14 und zwei dazwischen angeordneten, miteinander verschweissten Scheiben 12, 13. Im Unterschied zum Rotor 10 der Fig. 1 ist hier jedoch das linke Wellenende 11 massiv ausgeführt, wodurch es beispielsweise für höhere Drehmomente geeignet ist. Die rechte Bohrung 16 ist gegenüber Fig. 1 gleich geblieben, die linke Bohrung 15' reduziert sich dagegen in der axialen Länge auf die beiden Scheiben 12 und 13. Angedeutet durch die punktierte Linie im linken Wellenende 11 ist hier eine zusätzliche Schweissnaht S im Wellenende. Hierdurch werden grosse Sprünge im Aussendurchmesser bei den Schmiedestücken für die Wellenenden vermieden.

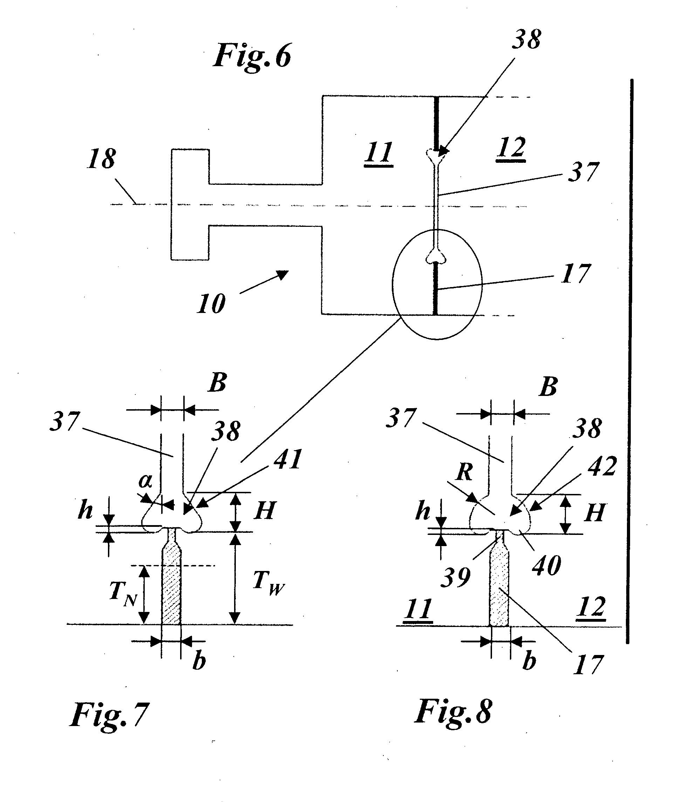

Beim Ausführungsbeispiel der Fig. 3 sind im Rotorballen des Rotors 10" die Wicklungsnuten 19 eingezeichnet, welche die Rotorwicklung aufnehmen und eine Nuttiefe T_{N} aufweisen. Die im Bereich der Wicklungsnuten 19 befindlichen Schweißnähte 17 weisen mit Vorteil eine Schweissnahttiefe (T_{W} in Fig. 7) auf, welche grösser ist als die Nuttiefe T_{N} der Wicklungsnuten 19. Insbesondere kann die Schweissnahttiefe der Schweissnähte 17 über den gesamten Umfang des Rotors 10, 10', 10" konstant sein. Im Beispiel der Fig. 3 wird die von einer Seite in den Rotor 10" hineinreichende zentrale Bohrung 16' als Zuführung für ein (gasförmiges) Kühlmedium benutzt, das durch erste Kühlgaskanäle 20, 21 im Bereich der Wellenende in die Bohrung 16' eingespiesen wird, und durch zweite, über den Rotorballen verteilt angeordnete Kühlgaskanäle 22 die Rotorwicklung bzw. den Rotorballen kühlt (siehe auch die Strömungspfeile in Fig. 3).

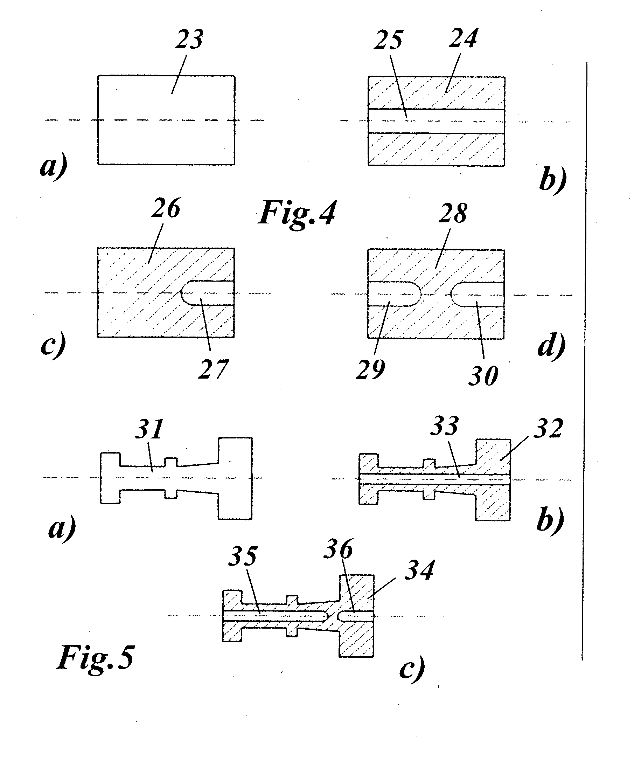

In den Fig. 4 und 5 sind verschiedene Ausführungsformen für den Rotorballen (Fig. 4) und die Wellenenden (Fig. 5) wiedergegeben. Der Rotorballen 23 der Fig. 4a ist massiv ausgeführt. Der Rotorballen 24 der Fig. 4b hat eine durchgehende Zentralbohrung 25. Der Rotorballen 26 hat eine von der einen (rechten) Seite ausgehende Sacklochbohrung 27. Der Rotorballen 28 der Fig. 4d schliesslich hat zwei spiegelbildlich gegenüberliegende Sacklochbohrungen 29 und 30. Die zugehörigen Scheiben haben innen entsprechend einen (zentralen) Hohlraum, der für Materialkontrollen, die Zuführung des Erregerstroms, sowie die Zu- und/oder Abfuhr von Kühlmedien eingesetzt werden kann. Dies ist insbesondere für 4-polige Turbogeneratorrotoren mit kreuzförmigem Magnetfeldbild vorteilhaft. Es ist auch denkbar, Scheiben mit mehreren einzelnen Hohlräumen zu verwenden. Die verschiedenen Höhlräume können durchgängig oder unterbrochen (Sacklöcher von einer oder beiden Seiten) sein (siehe dazu auch die Fig. 1-3).

Scheiben und Wellenenden können radiale Löcher (z.B. die Kühlgaskanäle 20-22 in Fig. 3) zur Aussenkontur oder zu den Wicklungsnuten aufweisen (für Materialkontrollen, Zu- und/oder Abfuhr von Kühlmedien). Die Wellenenden können massiv (Wellenende 31) oder mit Sacklöchern (Wellenende 34; Sacklochbohrungen 35, 36) oder mit einer durchgehenden Zentralbohrung 33 (Wellenende32) ausgeführt werden (siehe Fig. 5a-c), z.B. zur Abdichtung gegen Kühlgas, oder um stellenweise hohe mechanische Festigkeiten zu erreichen.

Das Ausmass des Hohlraums der Scheiben kann unterschiedlich sein, um ggf. das mechanische Verhalten des Rotors zu verbessern. Desgleichen kann die Höhe der Schweißnähte im Bereich des Rotorballens unterschiedlich sein.

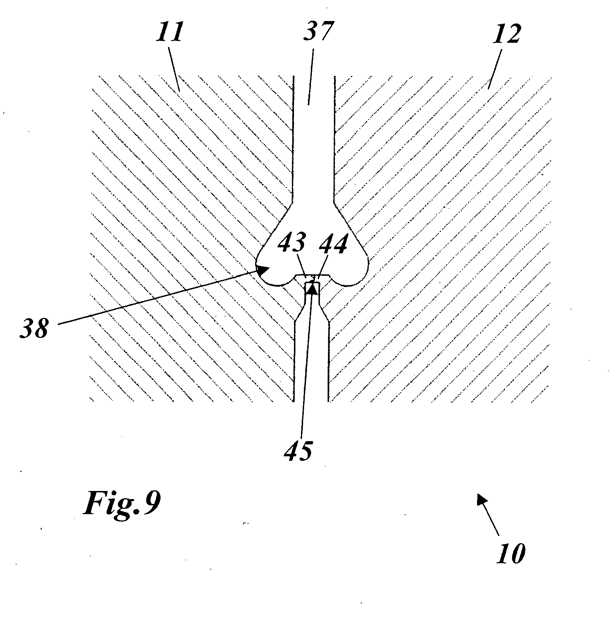

Um ein grösstmögliches magnetisch wirksames Volumen des Rotorkörpers zu erlangen, weisen die Hohlräume unter den Schweissnähten 17 einen bei den Rotoren nach der Erfindung einen kleinstmöglichen Spalt 37 auf (Fig. 6). Dies wird durch parallele Scheibenflächen erreicht, an deren äusserem Rand eine besonders ausgestaltete Kaverne in Form eines umlaufenden Hohlraums 38 angebracht ist. Um die zu verschweissenden Rotorelemente 11 und 12 gegeneinander zentrieren zu können und den Spalt 37 beim Schweissen offen zu halten, sind an beiden gemäss Fig. 9 an beiden Rotorelementen 11, 12 zwischen dem Hohlraum 38 und dem anschliessenden Schweissspalt umlaufende Bundstege 43, 44 mit demselben Radius vorgesehen, die mit einer abgestuften Randkontur 45 zentrierend ineinandergreifen und beim späteren Verschweissen aufgeschmolzen werden, so dass sich der in Fig. 7 bzw. 8 gezeigte Endzustand ergibt.

Der Spalt 37 und der Hohlraum 38 sind wie folgt beschaffen: Die Spaltbreite (B in Fig. 7, 8) zwischen den Scheiben 11, 12 (paralleler Spalt) ist so gering als möglich, um ein maximales magnetisch wirksames Volumen zu erreichen. Ein übliches Spaltmass in axialer Richtung ist die Schweissnahtbreite, was eine vollständige Prüfung der Schweissnaht sicherstellt.

Die Kaverne 38 am äusseren Rand des Spalts 37 ist in der radialen Erstreckung (Höhe H) und axialen Länge so klein als möglich, wiederum um ein maximales magnetisch wirksames Volumen zu erreichen. Die Kaverne 38 wird geometrisch so ausgebildet, dass möglichst geringe mechanische Spannungen entstehen. Sie besteht im Allgemeinen aus einem (beidseitigen) Hinterstich 40 der Höhe h auf der radialen Höhe der Wurzelnaht 39 der Schweissnaht 17, und einer Übergangskontur 41 bzw. 42 zum Parallelspalt 37. Die Übergangskontur kann kreisbogenförmig (42 in Fig. 8; Radius R), linear (41 in Fig. 7; Gerade unter Winkel α) oder durch eine Kombination beider ausgeführt sein.

Die Fertigung des Rotors 10, 10', 10" erfolgt in einer Weise, bei der die Scheiben 12, 13 zuerst über 360° mit konstanter Tiefe, welche grösser ist als die Nuttiefe T_{N}, geschweisst werden. Anschliessend erfolgt ggf. ein Spannungsarmglühen, das Überdrehen des gesamten Rotors und das Fräsen der Wicklungsnuten 19.

Diese Fertigungssequenz hat folgende Vorteile:
- Beim Fräsen der Wicklungsnuten fallen keine Späne in die Spalte zwischen den Scheiben.
- Gute Kontrolle der Schweißverbindung über die tragende Höhe der Rotorzähne (zwischen den Wicklungsnuten).
- Lagerhaltung standardisierter Scheiben (welche vorgeprüft sind) ermöglicht kurze Durchlaufzeiten.
- Das Risiko von Ausschuss eines auf Bestellung gefertigten Monoblock-Schmiedestücks wird eliminiert (bei Ausschuss eines großen Monoblocks kann ein Lieferverzug von mehr als 1 Jahr entstehen).
- Hohe Präzision der Rotornuten hinsichtlich geometrischer Form in der Ebene und Geradheit, Parallelität über die gesamte Ballenlänge.

### BEZUGSZEICHENLISTE

- 10,10',10": Rotor (geschweisst, für Turbogenerator)
- 11,14: Wellenende
- 12,13: Scheibe
- 15,15',16,16': Bohrung
- 17: Schweissnaht
- 18: Rotorachse
- 19: Wicklungsnut
- 20,21,22: Kühlgaskanal
- 23,24,26,28: Rotorballen
- 25,33: Zentralbohrung
- 27,29,30: Sacklochbohrung
- 31,32,34: Wellenende
- 35,36: Sacklochbohrung
- 37: Spalt
- 38: Hohlraum (Kaverne)
- 39: Wurzelnaht
- 40: Hinterstich
- 41,42: Übergangskontur
- 43,44: Bundsteg (umlaufend)
- 45: Randkontur (abgestuft, ineinandergreifend)
- α: Winkel (Übergangskontur)
- b: Schweissnahtbreite
- B: Spaltbreite
- h: Höhe (Hinterstich)
- H: Höhe (Hohlraum)
- R: Radius (Übergangskontur)
- S: Schweissnaht (im Wellenende)
- T_{N}: Nuttiefe (Wicklungsnut)
- T_{W}: Schweissnahttiefe

## Patentansprüche

1. Verfahren zum Herstellen eines Rotors, bei dem zunächst in einem ersten Schritt die Rotorelemente (11,..,14) über den gesamten Umfang von 360° mit einer konstanten Tiefe (T_{W}) geschweisst werden, welche grösser ist als die spätere Nuttiefe (T_{N}), dass in einem zweiten Schritt der gesamte Rotor (10, 10', 10") überdreht wird, und dass in einem dritten Schritt die Wicklungsnuten (19) in den Rotorballen (23, 24, 26, 28) gefräst werden, **dadurch gekennzeichnet, dass** Rotorelemente (11, 12) verwendet werden, welche an den zu verschweissenden Seiten zwischen dem Hohlraum (38) und dem anschliessenden Schweissspalt zum Zentrieren und zur Einstellung der Breite des Spaltes (37) umlaufende Bundstege (43, 44) aufweisen, die mit einer abgestuften Randkontur (45) zentrierend ineinandergreifen und beim späteren Verschweissen aufgeschmolzen werden.

2. Verfahren nach Anspruch 1, **dadurch gekennzeichnet, dass** der Rotor vor dem Überdrehen spannungsarm geglüht wird.

## Claims

1. Method for producing a rotor, in which first of all, in a first step, the rotor elements (11,..,14) are welded over the whole circumference of 360⁰ with a constant depth (T_{W}) which is greater than the subsequent slot depth (T_{N}), in which in a second step the whole rotor (10, 10', 10") is turned, and in which in a third step the winding slots (19) are cut into the rotor body (23, 24, 26, 28), **characterized in that** rotor elements (11, 12) are used which, on the sides which are to be welded between the cavity (38) and the adjacent weld gap, have encompassing collar webs (43, 44) for centring and for adjustment of the width of the gap (37), and which by a stepped edge contour (45) interlock with a centring action and are fused during subsequent welding.

2. Method according to Claim 1, **characterized in that** the rotor is low-stress annealed before turning.

## Revendications

1. Procédé de fabrication d'un rotor, dans lequel, dans une première étape, les éléments de rotor (11,.., 14) sont d'abord soudés sur toute la périphérie de 360° avec une profondeur constante (T_{W}) qui est supérieure à la profondeur de rainure ultérieure (T_{N}), dans une deuxième étape, l'ensemble du rotor (10, 10', 10'') est retourné et dans une troisième étape, les rainures d'enroulement (19) sont fraisées dans le corps du rotor (23, 24, 26, 28), **caractérisé en ce que** l'on utilise des éléments de rotor (11, 12) qui présentent, au niveau des côtés à souder, entre la cavité (38) et la fente de soudage suivante pour le centrage et l'ajustement de la largeur de la fente (37), des nervures d'épaulement périphériques (43, 44) qui s'engagent les unes dans les autres avec un effet de centrage avec un contour de bord étagé (45) et qui sont fondues lors du soudage ultérieur.

2. Procédé selon la revendication 1, **caractérisé en ce que** le rotor est recuit avec une faible tension avant son retournement.
